(19) Europäisches Patentamt
European Patent Office
Office européen des brevets

(11) Publication number: **0 248 112 A2**

# (12) EUROPEAN PATENT APPLICATION

(21) Application number: 86115597.6

(22) Date of filing: 11.11.86

(51) Int. Cl.³: G 01 N 31/22, G 01 N 33/66

(30) Priority: 21.11.85 DE 3541097

(43) Date of publication of application: 09.12.87 Bulletin 87/50

(84) Designated Contracting States: DE FR GB IT

(71) Applicant: MILES LABORATORIES, INC.
1127 Myrtle Street
Elkhart Indiana 46514(US)

(72) Inventor: Heidenreich, Holger, Dr.
Andreas-Gryphius-Strasse 22
D-5000 Köln 80(DE)

(72) Inventor: Wolfrum, Gerhard, Dr.
Domblick 17
D-5090 Leverkusen 3(DE)

(72) Inventor: Wehling, Klaus, Dr.
Palkestrasse 5
D-5600 Wuppertal 1(DE)

(72) Inventor: Hugl, Herbert, Dr.
Gemarkenweg 9
D-5060 Bergisch-Gladbach 2(DE)

(74) Representative: Jesse, Ralf-Rüdiger, Dr. et al,
Bayer AG Konzernverwaltung RP Patentabteilung
D-5090 Leverkusen 1 Bayerwerk(DE)

## (54) Use of thiophenes as pH indicators, in particular in a non-enzymatic glucose test.

(57) The invention relates to the use of thiophenes of the general formula (I)

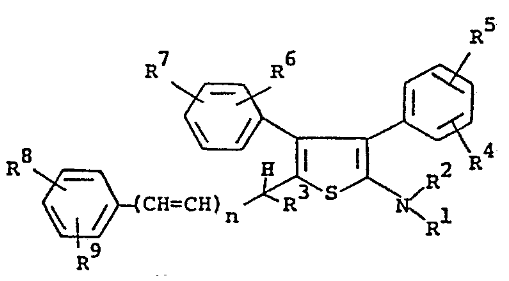

(I)

where: $R^1$ and $R^2$ independently of one another stand for hydrogen, substituted alkyl, cycloalkyl, aralkyl or $R^1$ and $R^2$ form a ring, n is the number 0 or 1, $R^3$ is a pendant group and $R^4$ to $R^9$ stand for dye chemistry substituents, as pH-indicators. The indicators are especially suitable for use in a nonenzymatic test for hexoses, as for instance, glucose.

EP 0 248 112 A2

Croydon Printing Company Ltd.

# Use of thiophenes as pH indicators, in particular in a non-enzymatic glucose test

The present invention relates to the use of thiophenes of the general formula (I), as described in more detail below, as pH-indicators. These indicators are especially suitable for use in nonenzymatic tests of hexoses such as nonenzymatic glucose tests.

In chemistry a large number of pH-indicators are known, i.e., substances which reversibly and reproducibly show a color change depending on the pH-value. Examples of known pH-indicators include cresol red, methyl orange, methyl red and bromothymol blue. Most of these substances show a color change from one color to another which often leads to difficulties in accurately detecting the change point. To overcome this problem the use of mixed indicators has been suggested (Kalthoff and Menzel, Volumetric Analysis, Part 2, 2. Ed. 1931, p. 64, Springer Publ. Berlin; and Ramy, H., Textbook of Inorganic Chemistry, 13th Ed. [1970], Vol. 1, p. 1001, Academic Publ. Geest and Parting, Leipzig). The change point is substantially easier to detect if the change takes place from colorless to colored. Some known indicators show such a color change; they are colorless in an acid milieu but in an alkaline milieu are converted into colored anions. Known examples include nitrophenols, phenolphthalein and 4,5,6,7-tetrabromophthalein. Two examples of

indicators which are present as colorless anions in an alkaline milieu and are converted into colored compounds by acidifying are 2,2',2,2",4,4'-pentamethoxytriphenylcarbinol, which has a range of change from pH 1.2 to 3.2, and Anilin blue WS (triphenylpararosanilin trisulfonic acid), with a range of change from pH 9.4 to 14. Both indicators, therefore, have their change under either strongly acid or strongly alkaline conditions. Thus far no indicators are known to have their change range near the neutral point; being colorless when alkaline and converted into a colored compound upon acidification.

It was surprisingly found that thiophenes of the general formula (I)

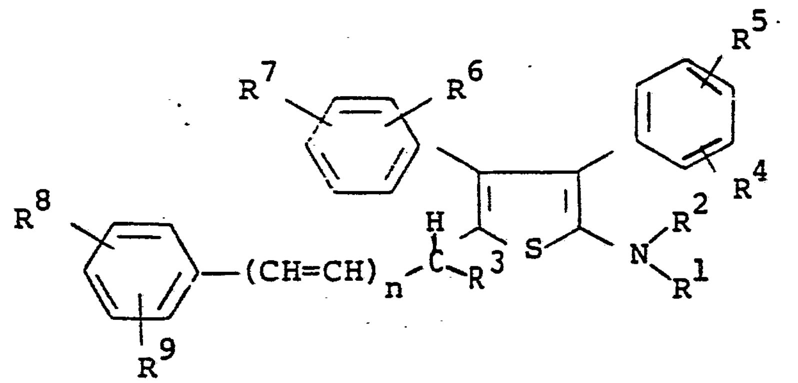

(I)

where:

$R^1$ and $R^2$ independently of one another stand for hydrogen, substituted alkyl, cycloalkyl, aralkyl, or

$R^1$ and $R^2$ form a ring,

n is the number 0 or 1,

$R^3$ is a pendant group, and

$R^4$ to $R^9$ stand for dye chemistry substituents

can be used as pH-indicators.

The indicators are colorless or pale yellow as anions in an alkaline milieu. Acidifying turns them into more or less strongly colored compounds. The color, and also the range of change, can be influenced through the selection of the individual substituents.

Suitable as indicators are thiophenes with the general formula (I) where:

$R^1$ and $R^2$ independently of one another stand for hydrogen, $C_1$- to $C_4$-alkyl, which can be substituted with halogen, cyano, $C_1$- to $C_4$-alkoxycarbonyl, $C_1$- to $C_4$-alkoxy, hydroxy, $-OSO_3H$, $-SO_3H$, amino, where the amino group for its part can be substituted with $C_1$-$C_4$-alkyl, phenyl or benzyl groups, which can be substituted with halogen, hydroxy, cyano, $-OSO_3H$, or $-SO_3H$,

or

$R^1$ and $R^2$ together with the N-atom stand for a pyrrolidine, pyrazoline, piperidine, piperazine or morpholine ring which can be substituted with $C_1$- to $C_4$-alkyl or phenyl,

$R^3$ stands for -OH, -SH, $-O-C_1-C_4$-alkyl, $-S-C_1-C_4$-alkyl, -O-phenyl, -S-phenyl, $-NR^{1'}R^{2'}$, -CN or $-O_2-S-R^{1'}$, -CN or $-O_3S-R^{1'}$, where $R^{1'}$ and $R^{2'}$ independently of one another have the meanings indicated for $R^1$ and $R^2$,

$R^4$, $R^5$, $R^6$, $R^7$ independently of one another stand for hydrogen $C_1$-$C_4$-alkyl, phenyl, halogen, cyano, $C_1$-$C_4$-alkoxy, phenoxy, benzyloxy or $-NR^{1'}R^{2'}$, where $R^{1'}$ and $R^{2'}$ independently of one another have the meanings indicated for $R^1$ and $R^2$,

n is the number 0 to 1,

$R^8$ and $R^9$ independently of one another stand for hydrogen, $C_1$- to $C_4$-alkyl, $C_1$- to $C_4$-alkoxy, $C_1$- to $C_4$-alkylthio, hydroxy, halogen, $C_2$- to $C_6$-alkenyloxy, phenyl, phenoxy, cyclohexyloxy, benzyloxy, phenylethoxy or phenylthio, where the mentioned rings can be substituted with $C_1$- to $C_4$-alkyl, $C_1$- to $C_4$-alkoxy or halogen, or mean $-NR^{1'}R^{2'}$ $R^{1'}$ and $R^{2'}$ independently of one another have the meanings indicated for $R^1$ and $R^2$,

or

$R^8$ and $R^9$ together with the benzene ring to which they are bound form a naphthalene ring which can bear the substituents described under $R^8$ and $R^9$.

Preferably used as pH-indicators are thiophenes of the general formula (I) where:
$R^1$,$R^2$, $R^3$ and n have the meanings indicated above,
$R^4$ and $R^7$ independently of one another stand for hydrogen, methyl, chlorine, bromine, methoxy, phenoxy, $NR^{1'}R^{2'}$,
$R^5$ and $R^6$ independently of one another stand for hydrogen $C_1$-$C_4$-alkyl, $C_1$-$C_4$-alkoxy, chlorine,
$R^8$ stands for methoxy, methyl, chlorine, bromine, hydroxyalkyl or $-NR^{1'}R^{2'}$,
$R^9$ stands for hydrogen, $C_1$-$C_4$-alkyl, $C_1$-$C_4$-alkoxy or halogen, where the mentioned radicals $R^{1'}$ and $R^{2'}$ independently of one another have the meanings indicated for $R^1$ and $R^2$.

The positions of the individual substituents in the rings are widely variable. One prefers for the

radicals $R^4$, $R^7$ and $R^8$ the para-position with respect to the connecting thiophene group.

Furthermore, preferred as pH-indicators are thiophenes of the general formula (I) :

$R^1$, $R^2$ and n have the meanings indicated above,

$R^3$ stands for $NR^{1'}R^{2'}$, $R^{1'}$ and $R^{2'}$ independently of one another have the same meanings as $R^1$ and $R^2$,

$R^4$ to $R^7$ stand for hydrogen,

$R^8$ has the para-position with respect to the connecting thiophene group and stands for $C_1$-$C_4$- alkoxy or $-NR^{1'}R^{2'}$ and the mentioned radicals $R^{1'}$ and $R^{2'}$ independently of one another have the same meanings as $R^1$ and $R^2$, and

$R^9$ has the ortho-position with respect to the connecting thiophene group and stands for hydrogen, $C_1$-$C_4$-alkyl, $C_1$-$C_4$-alkoxy or halogen.

Furthermore, preferred as pH-indicators are thiopenes of the general formulas (I) where:

$R^1$ and $R^2$ independently of one another stand for $C_1$-$C_4$-alkyl which is substituted with halogen, cyano, hydroxy, $-SO_3H$, $-OSO_3H$, $C_1$-$C_4$-alkoxy-carbonyl,

$R^3$ stands for $NR^{1'}R^{2'}$, $R^{1'}$ and $R^{2'}$ independently of one another means $C_1$-$C_4$-alkyl which is substituted with halogen, cyano, hydroxy, $-SO_3H$, $-OSO_3H$, alkoxycarbonyl,

$R^8$ stands for $-N(CH_3)_2$, $-N(C_2H_5)_2$, $-OCH_3$,

$R^4$ to $R^7$ and $R^9$ stand for hydrogen,

n stands for 0.

Especially preferred as pH-indicators are thiophenes of the general formula (I) where:
$-NR^1R^2$ stands for morpholino,
$R^3$ stands for morpholino, and
$R^4$ to $R^9$ and n have the meanings indicated above.

Very specially preferred as pH-indicators are thiophenes of the general formula (I) where:
$-NR^1R^2$ stands for morpholino,
$R^3$ stands for morpholino,
$R^8$ in the para-position stands for $-N(CH_3)_2$ or $-OCH_3$, and
$R^4$ to $R^7$ and $R^9$ stand for hydrogen,
n means 0.

An area of use for the indicators is their application in a nonenzymatic sugar determination. It is known that sugars form complexes with borates and hydroxides of earth alkali metals (S.A. Backer et al., Carbohydrate Research, 26 [1973] 33-40; N. Roy et al., Carbohydrate Research, 24 [1972] 180-183). This property, however, has thus far not been used for the quantitative or qualitative determination of sugars. Using the indicators according to the invention makes such determinations possible. The complex formation of the sugars with borates or hydroxides of each alkali metals liberates $H^+$-ions that can be detected with the indicators. The sugar determination is carried out by bringing the sugar into contact with the complex former, such as for instance a borate or hydroxide of an earth alkali metal, and measuring the concentration of the freed $H^+$-ions by means of one or more of the indicators.

Evaluation of the concentration can be visual as well as instrumental. The initial pH-value of the test agent for the sugar determination in essence depends on the range of change of the indicator used but should lie above pH 6.5 because complex formation takes place in that range.

The sugar determination can be carried out in solution, but also by means of so-called test strips, i.e., diagnostic reagent test devices.

The synthesis of the indicators and their use is described in the following.

The synthesis of the indicators is done essentially following Journal für praktische Chemie, pp. 50 ff, Vol. 36 (1967) by reacting compounds of the formula (II)

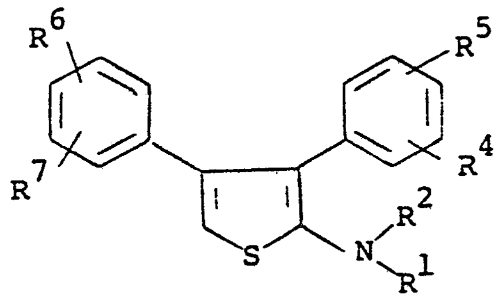

(II)

with aldehydes of the formula (III)

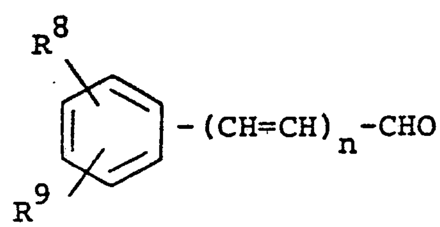

(III)

where:

$R^1$, $R^2$, $R^4$ to $R^9$ have the meanings indicated above. The formed methin is carried into the indicator by a reaction with $R^3H$, where $R^3$ has the meaning mentioned above.

The reaction is carried out so that one dissolves the reaction components in an organic solvent and brings them to reaction preferably with an acid condensation agent.

Suitable condensation agents are lower aliphatic carbonic acids such as formic acid or acetic acid, or inorganic acids such as hydrochloric acid, sulfuric acid, phosphoric acid or perchloric acid. Suitable organic solvents are lower aliphatic alcohols, as for instance methanol, ethanol or isopropanol or cyclic ethers, as for instance dioxan or tetrahydrofuran, DMF, dimethylacetamide or N-methylpyrrolidone, dichloromethane or chloroform.

Solvents free from hydroxyl groups are obtained by using phosphoroxychloride.

The reaction can be carried out at a temperature of 10° to 140°C, preferably at 40° to 100°C.

EXAMPLE 1

3.2 g (grams) 2-morpholino-3,4-diphenylthiophene and 2,2 g 4-dimethylamino-benzaldehyde are stirred in 50 ml (milliliters) methanol. After adding 2 ml 70% perchloric acid one heats 1 hour under reflux. After cooling the royal-blue solution, blue, gold-shiny crystals are suctioned off (drawn off by vacuum) and washed with a little acetic acid.

The entire residue is heated in a mixture of 10 ml ethanol and 10 ml morpholine 1 hour under reflux. The colorless compound which precipitates in the cold and has the following structure:

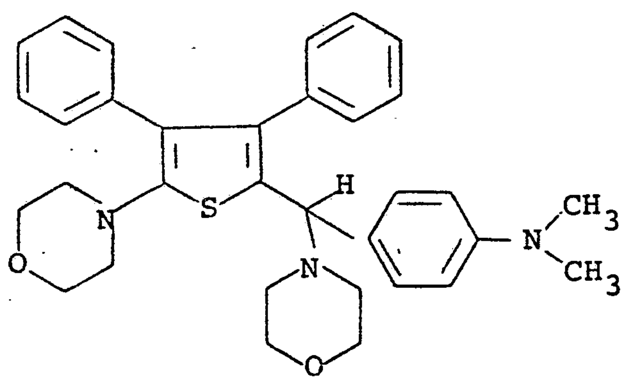

melts at 160°C (decomp.). The compound develops an intensive blue color with acids.

Morpholino-3,4-diphenyl-thiophene is prepared as follows: One lets 55.25 g phenylacetic acid thiomorpholide and 49.0 g phenacyl bromide react overnight in methylene chloride. The precipitated adduct is suctioned off, dissolved in 80 ml warm ethanol and subsequently cyclized with 20 ml triethylamine to give the thiophene. The precipitated product is collected and recrystallized from toluene (m.p.: 197°C).

EXAMPLE 2

3.2 g 2-morpholino-3,4-diphenyl-thiophene and 2.1 g 4-methoxybenzaldehyde are heated to a boil in 50 ml methanol with 2 ml 70% perchloric acid until no further starting material is found by thin-layer chromatography. Then one cools and suctions off the pink-red precipitate.

The residue is heated to a boil 1 hour in 30 ml ethanol and 10 ml morpholine. After cooling a colorless product of the following structure can be suctioned off.

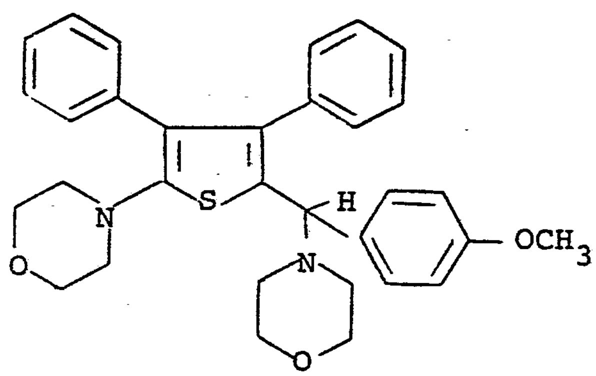

mp 170°C upon addition of acids the color changes to orange.

EXAMPLE 3

3.2 g 2-morpholino-3,4-diphenyl-thiophene and 2.6 g 4-dimethylaminocinnamic aldehyde are heated 1 hour to boiling in 50 ml methanol with 2 ml 70% perchloric acid. Upon cooling the following methin

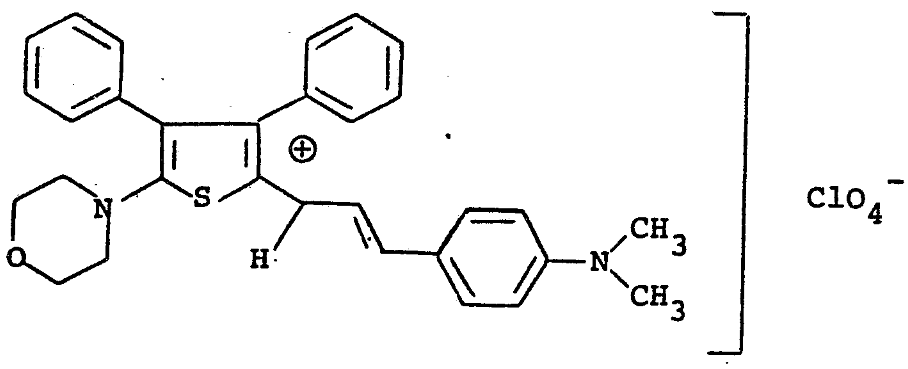

(mp 370°C) precipitates.

This compound is dissolved with a blue-green color in DMF (dimethyl formamide) and then with the addition of 10% NaOH carried into the colorless dye base of the following constitution, which precipitates as amorphous material. Addition of acids changes the color to blue-green.

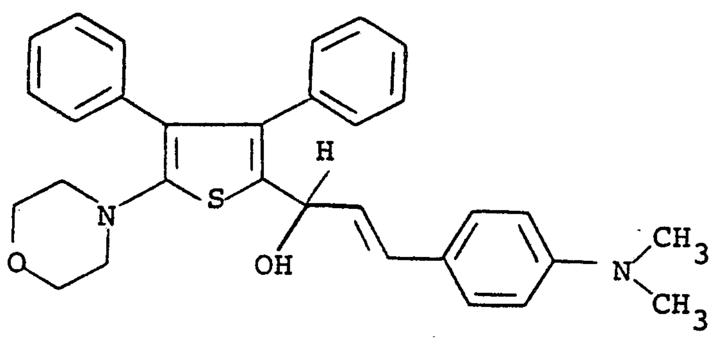

By the method described in the preceding examples, the following indicator pigments can be prepared.

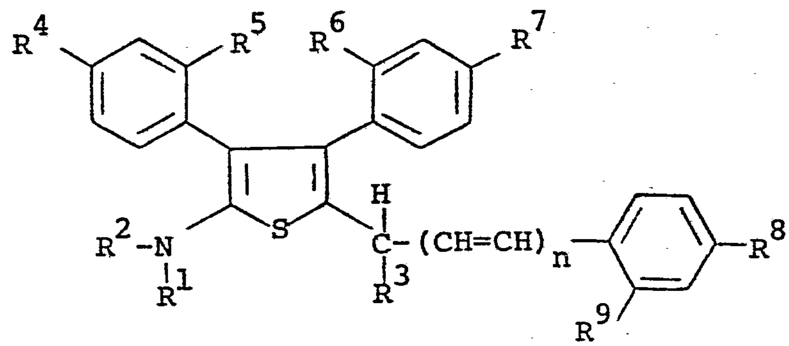

| Example | $R^1$ | $R^2$ | $R^3$ | $R^4$ | $R^5$ | $R^6$ | $R^7$ | $R^8$ | $R^9$ | n | Color Change |
|---|---|---|---|---|---|---|---|---|---|---|---|
| 4 | $-C_2H_5$ | $-C_2H_5$ | $-OCH_3$ | $-CH_3$ | -H | -H | $-CH_3$ | $-N(CH_3)_2$ | $-OCH_3$ | 0 | blue |
| 5 | $CH_3$<br>$-CH_2CH_2-N-CH_2CH_2-$* | | $-OC_6H_5$ | $-CH_3$ | -Cl | -Cl | $-CH_3$ | 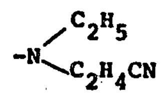 | -Cl | 0 | blue |
| 6 | $-CH_2CH_2CH_2CH_2CH_2$*- | | 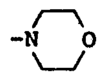 | -H | -H | -H | 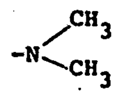 | -OH | -H | 0 | red |
| 7 | $-C_2H_4OH$ | $-C_2H_4OH$ | $-SC_6H_5$ | $-CH_3$ | $-CH_3$ | -H | -Cl | $-OCH_3$ | -H | 0 | orange |
| 8 | $-CH_3$ | $-CH_3$ | 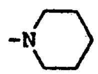 | $-CH_3$ | -H | -H | -H | -H | -H | 0 | yellow |
| 9 | $-C_2H_5$ | $-C_2H_4OSO_3H$ | -OH | -Br | -H | -H | -H | 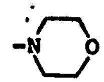 | -H | 0 | blue |
| 10 | $-C_2H_5$ | $-C_2H_5$ | 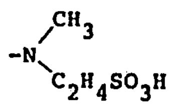 | -H | -H | -H | -Br | 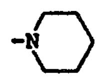 | -H | 0 | blue |
| 11 | $-CH_2CH_2-O-CH_2CH_2$*- | | 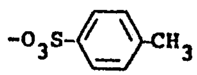 | -H | -H | -H | -Cl | -Br | -Br | 0 | yellow-orange |
| 12 | $-CH_2CH_2CH_2CH_2$* | | $-O_3S-CH_3$ | -H | -H | -H | -H | 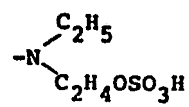 | -H | 0 | blue |
| 13 | $-C_2H_5$ | $-C_2H_4CN$ | -CN | -H | -H | -H | -H | -H | -OH | 0 | red |
| 14 | $-CH_2CH_2-O-CH_2CH_2$*- | | 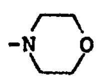 | $-CH_3$ | -H | -H | $-CH_3$ | $-N(CH_3)_2$ | -H | 1 | blue-green |

*$R^1$ and $R^2$ together form a closed ring.

## EXAMPLE 15

Characterization of the compound of Example 1.

### pH Dependency

2.5 mmol of of the compound of Example 1 were dissolved in N-methylpyrrolidine, mixed with borate-buffers of various pH-values, and the color was judged. Results were shown in Table 1.

Table 1

| pH | Color |
|---|---|
| 9.8 | colorless |
| 8.8 | light blue |
| 8.3 | medium blue |
| 7.3 | dark blue |

### Function and Linearity in the Sugar Test

The compound of Example 1 was dissolved in methylpyrrolidone and mixed 1:1 with phenyl borate buffer pH 9. The pH was adjusted with 1 N HCl to pH 10.7, 9.0 or 8.8. The final concentration of the compound in the test was 1.25 mmol.

Table 2

Extinction After 5 Minutes, Measured at 600 nm (nanometers

| Reagent pH Before Addition Glucose | Glucose Concentration in g/100 ml 0.5 | 1.0 | 2.5 | 5.0 |
|---|---|---|---|---|
| pH 10.7 | 0.022 | 0.036 | 0.102 | 0.222 |
| pH 9.0 | 0.015 | 0.045 | 0.128 | 0.264 |
| pH 8.8 | 0.174 | 0.326 | 0.832 | 1.691 |

## EXAMPLE 16

Characterization of the compound of Example 2.

### pH Dependency

One mmol of the compound of Example 2 was dissolved in dimethylformamide, then mixed 1:1 with borate-buffers of various pH-values. The colors of the resulting solutions were judged and the extinctions at 450 nm were measured. Results are seen in Table 3.

Table 3

| Borate Buffer pH | Color | Extinction 450 nm |
|---|---|---|
| 2.5 | orange-yellow | >2.0 |
| 3.1 | orange-yellow | 1.8 |
| 6.1 | yellow | 0.23 |
| 8.1 | colorless | 0.11 |

### Function and Linearity in the Sugar Test

One mmol of the compound of Example 2 was dissolved in DMF and mixed 1:1 with phenyl borate buffer; the pH-value was adjusted with HCl to 6.7. Five minutes after the addition of glucose the extinction was measured at 450 nm. Results of the measurements are compiled in Table 4.

Table 4

Extinction After 5 Minutes

| Glucose Concentration g/100 ml | 0.5 | 1.0 | 2.5 | 5.0 |
|---|---|---|---|---|
| Extinction at 450 nm | 0.039 | 0.063 | 0.175 | 0.316 |

Obviously, many other modifications and variations of the invention as hereinbefore set forth can be made without departing from the spirit and scope of the invention.

WHAT IS CLAIMED IS:

1. Use of thiophenes of the general formula (I)

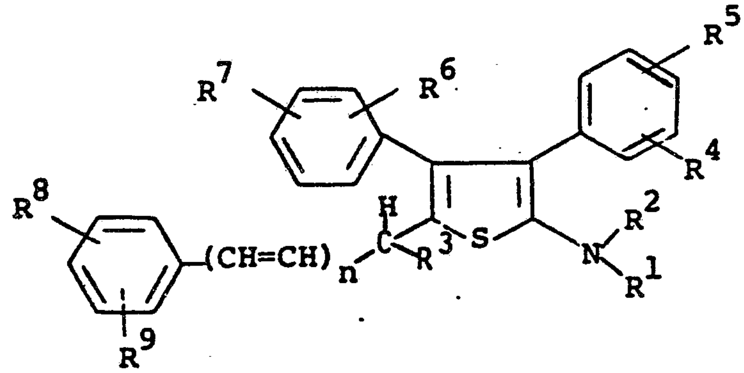

(I)

where:

$R^1$ and $R^2$ independently of one another stand for hydrogen, substituted alkyl, cycloalkyl, aralkyl or

$R^1$ and $R^2$ together form a ring,

n is the number 0 or 1,

$R^3$ is a pendant group and

$R^4$ to $R^9$ are dye chemistry substituents

as pH-indicators.

2. Use of thiophenes of the general formula (I) according to claim 1, where:

$R^1$ and $R^2$ independently of one another stand for hydrogen, $C_1$- to $C_4$-alkyl which can be substituted with halogen, cyano, $C_1$- to $C_4$-alkoxycarbonyl, $C_1$- to $C_4$-alkoxy, hydroxy, $OSO_3H$, $-SO_3H$, amino, where the amino group for its part can be substituted with halogen, hydroxy, cyano, $OSO_3H$, $SO_3H$-substituted $C_1$-$C_4$-alkyl, phenyl or benzyl groups

or

$R^1$ and $R^2$ together with the N-atom stand for a pyrrolidine, pyrazoline, piperidine, piperizine or morpholine ring which can be substituted with $C_1$- to $C_4$-alkyl or phenyl, $C_1$- to $C_4$-alkyl or phenyl,

$R^3$ stands for -OH, -SH, $-O-C_1-C_4$-alkyl, $-S-C_1-C_4$-alkyl, -O-phenyl, -S-phenyl, $-NR^{1'}R^{2'}$, -CN, $-O_2-S-R^1$ or $-O_3-S-R^1$ where $R^{1'}$ and $R^{2'}$ independently of one another have the meanings indicated for $R^1$ and $R^2$,

$R^4$, $R^5$, $R^6$, $R^7$ independently of one another stand for hydrogen, $C_1$-$C_4$-alkyl, phenyl, halogen, cyano, $C_1$-$C_4$-alkoxy, phenoxy, benzyloxy or $-NR^{1'}R^{2'}$, where $R^{1'}$ and $R^{2'}$ independently of one another have the meanings indicated for $R^1$ and $R^2$,

n is the number 0 or 1,

$R^8$ and $R^9$ independently of one another stand for hydrogen, $C_1$- to $C_4$-alkyl, $C_1$- to $C_4$-alkoxy, $C_1$- to $C_4$-alkylthio, hydroxy, halogen, $C_2$- to $C_6$-alkenyloxy, phenyl, phenoxy, cyclohexyloxy, benzyloxy, phenylethoxy or phenythio, where the mentioned rings can be substituted with $C_1$- to $C_4$-alkyl, $C_1$- to $C_4$-alkoxy or halogen, or mean

$-NR^{1'}R^{2'}$, $R^{1'}$ and $R^{2'}$ independently of one another have the meaning indicated for $R^1$ and $R^2$,

$R^8$ and $R^9$ together with the benzene ring to which they are bound form a naphthalene ring which can bear the substituents described under $R^8$ and $R^9$,

as pH indicators.

3. Use of thiophenes of the general formula (I) according to claim 2, where:

$R^4$ and $R^7$ independently or one another stand for hydrogen, methyl, chlorine, bromine, methoxy, phenoxy, $NR^{1'}R^{2'}$,

$R^5$ and $R^6$ independently of one another stand for hydrogen, $C_1$-$C_4$-alkoxy, chlorine,

$R^8$ stands for methoxy, hydroxy, methyl, chlorine, bromine, hydroxyalkyl or $-NR^{1'}R^{2'}$,

$R^9$ stands for hydrogen, alkyl alkoxy or halogen, the mentioned radicals $R^{1'}$ and $R^{2'}$ independently of one another have the meanings indicated for $R^1$ and $R^2$,

as pH indicators.

4. Use of thiophenes of the general formula (I) according to claim 3, where:

$R^4$, $R^7$ and $R^8$ are in the para-position with respect to the connecting thiophene group,

as pH indicators.

5. Use of thiophenes of the general formula (I) according to claim 1, where:

$R^3$ stands for $NR^{1'}R^{2'}$, where $R^{1'}$ and $R^{2'}$ independently have the same meanings as $R^1$ and $R^2$,

$R^4$ to $R^7$ stand for hydrogen,

$R^8$ is in the para-position to the connecting thiophene group and stands for $C_1$-$C_4$-alkoxy or $-NR^{1'}R^{2'}$ and the mentioned radicals $R^{1'}$ and $R^{2'}$ independently of one another have the same meanings as $R^1$ and $R^2$, and

$R^9$ is in the ortho-position to the connecting thiophene group and stands for hydrogen, $C_1$-$C_4$-alkyl, $C_1$-$C_4$-alkoxy or halogen,

as pH-indicators.

6. Use of thiophenes of the general formula (I) according to claim 5, where:

$R^1$ and $R^2$ independently of one another stand for $C_1$-$C_4$-alkyl which is substituted with halogen, cyano, hydroxy, $-SO_3H$-, $-OSO_3H$, $C_1$-$C_4$-alkoxycarbonyl,

$R^3$ stands for $NR^{1'}R^{2'}$, $R^{1'}$ and $R^{2'}$ independently of one another means $C_1$-$C_4$-alkyl which is substituted with halogen, cyano, hydroxy, $-SO_3H$, $OSO_3H$, alkoxy carbonyl,

$R^8$ stands for $-N(CH_3)_2$, $-N(C_2H_5)_2$, $-OCH_3$,

$R^4$ to $R^7$ and $R^9$ stand for hydrogen,

n stands for 0,

as pH-indicators,

7. Use of thiophenes of the general formula (I) according to claim 6, where: $-NR^1R^2$ in its entirety stands for morpholino, and $R^3$ stands for morpholino, as pH-indicators.

8. Use of thiophenes of the general formula (I) according to claim 7, where: $R^8$ in the para-position stands for $-N(CH_3)_2$ or $-OCH_3$, as pH-indicators.

9. Test agent for the nonenzymatic determination of hexoses, containing borates or hydroxides of an earth alkali metal and pH-indicator, characterized in that the pH-indicator is a thiophene according to claim 1.